# EUROPÄISCHE PATENTSCHRIFT

(11) **EP 0 741 760 B1**
(45) Veröffentlichungstag und Bekanntmachung des Hinweises auf die Patenterteilung: **19.11.1997**
(21) Anmeldenummer: 95908209.0
(22) Anmeldetag: 26.01.1995
(51) Int. Cl.: C08K 5/54, C08F 230/08

(54) **REDISPERGIERBARE DISPERSIONSPULVERZUSAMMENSETZUNG, VERFAHREN ZU DEREN HERSTELLUNG UND DEREN VERWENDUNG**
REDISPERSIBLE DISPERSION POWDER COMPOSITION, METHODS OF MANUFACTURING IT AND ITS USE
COMPOSITION PULVERULENTE EN DISPERSION, POUVANT ETRE REDISPERSEE, SON PROCEDE DE FABRICATION ET SON UTILISATION

(30) Priorität: 27.01.1994 DE 4402409
(43) Veröffentlichungstag der Anmeldung: 13.11.1996
(73) Patentinhaber: Wacker-Chemie GmbH, 81737 München (DE)
(72) Erfinder: ECK, Herbert, D-84489 Burghausen (DE); ADLER, Klaus, D-84489 Burghausen (DE); HOPF, Heinrich, D-84489 Burghausen (DE); JODLBAUER, Franz, D-84533 Marktl (DE); GERHARDINGER, Dieter, D-84489 Burghausen (DE)
(74) Vertreter: Schuderer, Michael
(86) Internationale Anmeldenummer: EP9500282
(87) Internationale Veröffentlichungsnummer: WO9520627

(56) Entgegenhaltungen:
- EP-A- 0 493 168
- US-A- 3 203 919

## Beschreibung

Die Erfindung betrifft eine in Wasser redispergierbare Dispersionspulverzusammensetzung auf der Basis von wasserunlöslichen Polymeren, Verfahren zu deren Herstellung und deren Verwendung.

In Wasser redispergierbare Dispersionspulverzusammensetzungen auf der Basis von Homo- oder Copolymerisaten sind bekannt. Die Herstellung derartiger Dispersionspulverzusamanensetzungen erfolgt durch Sprühtrocknung der entsprechenden wäßrigen Kunststoffdispersionen in einem heißen Luftstrom. Die Dispersionspulver eignen sich als Zusatzstoffe für hydraulische Bindemittel in der Baustoffindustrie, weiter werden derartige Produkte als Binder in Beschichtungsmitteln oder Klebemitteln eingesetzt.

Die EP-A 228657 (US-A 4704416) beschreibt in Wasser redispergierbare Dispersionspulver auf der Basis von wasserlöslichen Polymeren, welche organische Siliciumverbindungen, vorzugsweise Organopolysiloxane, enthalten. Die Dispersionspulver werden durch Sprühtrocknung einer Emulsion der organischen Siliciumverbindung in einer wäßrigen Lösung des wasserlöslichen Polymers hergestellt.

Gegenstand der EP-B 279373 sind in Wasser redispergierbare Organopolysiloxan enthaltende Pulver, welche zusätzlich wasserlösliches, filmbildendes Polymer enthalten. Die Herstellung erfolgt durch Sprühtrocknung der wäßrigen Gemische der genannten Bestandteile.

Die EP-A 493168 betrifft in Wasser redispergierbare Dispersionspulver auf der Basis von filmbildenden, wasserunlöslichen Vinyl- oder Acrylpolymerisaten, welche Silicone, genauer Organosiliconate und/oder Organopolysiloxane enthalten. Die Herstellung erfolgt durch Sprühtrocknung von wäßrigen Dispersionen der Vinyl- oder Acrylpolymerisate, denen vor dem Versprühen Silicone zugesetzt wurden.

Der Erfindung lag die Aufgabe zugrunde, in Wasser redispergierbare Dispersionspulverzusammensetzungen auf der Basis von wasserunlöslichen Polymeren zur Verfügung zu stellen, welche mit Organosiliciumverbindungen modifiziert sind.

Die Erfindung betrifft eine in Wasser redispergierbare Dispersionspulverzusammensetzung auf der Basis von wasserunlöslichen Organopolymeren, dadurch gekennzeichnet, daß die Pulverzusammensetzung 0.1 bis 30 Gew%, bezogen auf den Organopolymeranteil, einer oder mehrerer, in Wasser dispergierbarer Siliciumverbindungen mit einem Siedepunkt bei Normaldruck von > 160°C aus der Gruppe der Silane wie Tetraorganosilane SiR₄, Kieselsäureester (SiOR')₄, Organoorganoxysilane SiRₙ(OR')₄₋ₙ mit n = 1 bis 3, Polysilane der allgemeinen Formel R₃Si(SiR₂)ₙSiR₃ mit n = 0 bis 8 und Oligosiloxane der allgemeinen Formel R₃SiO(SiR₂O)ₙSiR₃ mit n = 0 bis 4, wobei R' für gleiche oder verschiedene Alkylreste oder Alkoxyalkylreste mit 1 bis 4 C-Atomen steht, vorzugsweise Methyl oder Ethyl bedeutet, und R gleich oder verschieden ist und verzweigte oder unverzweigte Alkylreste mit 1 bis 22 C-Atome, Cycloalkylreste mit 3 bis 10 C-Atomen, Aryl-, Aralkyl-, Alkylarylreste mit 6 bis 18 C-Atomen bedeutet, wobei die genannten Reste R auch mit Halogenen wie F oder Cl, mit Ether-, Thioether, Ester-, Amid-, Nitril-, Hydroxyl-, Amin-, Carboxyl-, Sulfonsäure-, Carbonsäureanhydrid- und Carbonylgruppen substituiert sein können, wobei im Falle der Polysilane und Oligosiloxane R auch die Bedeutung OR' haben kann, sowie der Carbosilane und Carbosiloxane enthält.

Als wasserunlösliche Organopolymere eignen sich Homo- und Copolymere, die in Form einer wäßrigen Dispersion vorliegen oder die sich in eine wäßrige Dispersion überführen lassen und welche, gegebenenfalls bei erhöhter Temperatur und/oder im alkalischen Medium, nach dem Auftrocknen und gegebenenfalls Aushärten einen festen Film bilden. Die mittlere Teilchengröße der Dispersionspulverteilchen beträgt im allgemeinen 1 bis 1000 µm, vorzugsweise 10 bis 700 µm, besonders bevorzugt 50 bis 500 µm.

Als wasserunlösliche Polymere bevorzugt sind:
Vinylester-Homo- oder -Copolymerisate enthaltend eine oder mehrere Monomereinheiten aus der Gruppe der Vinylester von unverzweigten oder verzweigten Alkylcarbonsäuren mit 1 bis 15 C-Atomen;
(Meth)acrylsäureester-Homo- oder -Copolymerisate enthaltend eine oder mehrere Monomereinheiten aus der Gruppe der Methacrylsäureester und Acrylsäureester von unverzweigten oder verzweigten Alkoholen mit 1 bis 12 C-Atomen;
Homo- oder Copolymerisate von Fumar- und/oder Maleinsäure- mono- oder -diester von unverzweigten oder verzweigten Alkoholen mit 1 bis 12 C-Atomen;
Homo- oder Copolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert werden können;
Homo- oder Copolymerisate von Vinylaromaten wie Styrol, Methylstyrol, Vinyltoluol;
Homo- oder Copolymerisate von Vinylhalogenverbindungen wie Vinylchlorid.

Gegebenenfalls eignen sich auch wasserunlösliche, filmbildende Polyadditions- und Polykondensationspolymere wie Polyurethane, Polyester, Polyether (außer Polyethylenoxid), Polyamide, Melaminformaldehydharze, Phenolformaldehydharze, gegebenenfalls auch in Form ihrer oligomeren Vorprodukte.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit bis zu 10 C-Atomen, beispielsweise VeoVa9^{R} oder VeoVa10^{R}. Besonders bevorzugt ist Vinylacetat.

Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Bevorzugte Estergruppen der Fumar- und Maleinsäure sind Methyl-, Ethyl-, n-Propyl-, iso-Propyl-, n-Butyl-, isoButyl-, t-Butyl-, Hexyl-, Ethylhexyl-, und Dodecyl-Gruppe.

Die Vinylester-Copolymerisate können gegebenenfalls 1.0 bis 65 Gew%, bezogen auf das Gesamtgewicht der Comonomerphase, α-Olefine wie Ethylen oder Propylen und/oder Vinylaromaten wie Styrol und/oder Vinylhalogenide wie Vinylchlorid und/oder Acrylsäureester bzw. Methacrylsäureester von Alkoholen mit 1 bis 10 C-Atomen, wie Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat und/oder ethylenisch ungesättigte Dicarbonsäureester bzw. deren Derivate wie Diisopropylfumarat, die Dimethyl-, Methyl-t-butyl-, Di-n-butyl-, Di-t-Butyl- und Diethylester der Maleinsäure bzw. Fumarsäure, oder Maleinsäureanhydrid enthalten.

Die (Meth)acrylsäureester-Copolymerisate können gegebenenfalls 1.0 bis 65 Gew%, bezogen auf das Gesamtgewicht der Comonomerphase, α-Olefine wie Ethylen oder Propylen und/oder Vinylaromaten wie Styrol und/oder Vinylhalogenide wie Vinylchlorid und/oder ethylenisch ungesättigte Dicarbonsäureester bzw. deren Derivate wie Diisopropylfumarat, die Dimethyl-, Methyl-t-butyl-, Dibutyl- und Diethylester der Maleinsäure bzw. Fumarsäure, oder Maleinsäureanhydrid enthalten.

In einer bevorzugten Ausführungsform enthalten die Vinylester-Copolymerisate und die (Meth)acrylsäureester-Copolymerisate noch 0.05 bis 10.0 Gew%, bezogen auf das Gesamtgewicht des Comonomergemisches, Hilfsmonomere aus der Gruppe der ethylenisch ungesättigten Carbonsäuren, vorzugsweise Acrylsäure oder Methacrylsäure; aus der Gruppe der ethylenisch ungesättigten Carbonsäureamide, vorzugsweise Acrylamid; aus der Gruppe der ethylenisch ungesättigten Sulfonsäuren bzw. deren Salze, vorzugsweise Vinylsulfonsäure; und/oder aus der Gruppe der mehrfach ethylenisch ungesättigten Comonomeren, beispielsweise Divinyladipat, Diallylmaleat, Allylmethacrylat oder Triallylcyanurat. Als Hilfsmonomere qeeiqnet sind auch vernetzend wirkende Comonomere, beispielsweise Acrylamidoglykolsäure (AGA), Methylacrylamidoglykolsäuremethylester (MAGME), N-Methylolacrylamid (NMAA), N-Methylolmethacrylamid, N-Methylolallylcarbamat, Alkylether, wie der Isobutoxyether, oder Ester des N-Methylolacrylamids, des N-Methylolmethacrylamids oder des N-Methylolallylcarbamats.

Entsprechendes wie für die (Meth)acrylsäureester-Copolymerisate gilt für die Copolymerisate der Ester der Malein- oder Fumarsäure.

Die Herstellung der genannten, radikalisch polymerisierbaren, wasserunlöslichen Polymere erfolgt vorzugsweise nach dem Emulsionspolymerisationsverfahren. Die Polymerisation kann diskontinuierlich oder kontinuierlich, mit oder ohne Verwendung von Saatlatices, unter Vorlage aller oder einzelner Bestandteile des Reaktionsgemisches, oder unter teilweiser Vorlage und Nachdosierung der oder einzelner Bestandteile des Reaktionsgemisches, oder nach dem Dosierverfahren ohne Vorlage durchgeführt werden. Alle Dosierungen erfolgen vorzugsweise im Maße des Verbrauchs der jeweiligen Komponente. Die Polymerisation wird vorzugsweise in einem Temperaturbereich von 0 bis 100°C durchgeführt und mit den für die Emulsionspolymerisation üblicherweise eingesetzten Methoden eingeleitet. Die Initiierung erfolgt mittels der üblichen wasserlöslichen Radikalbildner, die vorzugsweise in Mengen von 0.01 bis 3.0 Gew%, bezogen auf das Gesamtgewicht der Monomeren, eingesetzt werden. Als Dispergiermittel können alle üblicherweise bei der Emulsionspolymerisation verwendeten Emulgatoren und/oder Schutzkolloide eingesetzt werden.

Gegebenenfalls werden bis zu 6 Gew%, bezogen auf das Gesamtgewicht der Monomeren, an Emulgator eingesetzt. Als Emulgatoren kommen hierbei sowohl anionische, kationische als auch nichtionische Emulgatoren in Betracht, soweit diese nicht im Schutzkolloid löslich sind. Vorzugsweise werden Schutzkolloide, besonders bevorzugt in Mengen von bis zu 15 Gew%, bezogen auf das Gesamtgewicht der Monomeren, eingesetzt. Beispiele hierfür sind Polyvinylalkohole und deren Derivate wie Vinylalkohol/Vinylacetat-Copolymere, Polyvinylpyrrolidone; Polysaccharide in wasserlöslicher Form wie Stärken (Amylose und Amylopectin), Cellulose, Guar, Tragcantinsäure, Dextran, Alginate und deren Carboxymethyl-, Methyl-, Hydroxyethyl-, Hydroxypropyl-Derivate; Proteine wie Casein, Sojaprotein, Gelatine; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. In der am meisten bevorzugten Ausführungsform wird die Polymerisation mit Schutzkolloid und ohne Zugabe von Emulgator durchgeführt.

Geeignete in Wasser dispergierbare Siliciumverbindungen sind solche deren Siedepunkt bei Normaldruck über 160°C liegt, aus der Gruppe der Silane wie Tetraorganosilane SiR₄, Kieselsäureester Si(OR')₄, Organoorganoxysilane SiRₙ(OR')₄₋ₙ mit n = 1 bis 3, Polysilane der allgemeinen Formel R₃Si(SiR₂)ₙSiR₃ mit n = 0 bis 8, und Oligosiloxane der allgemeinen Formel R₃SiO(SiR₂O)ₙSiR₃ mit n = 0 bis 4, wobei R' für gleiche oder verschiedene Alkylreste oder Alkoxyalkylreste mit 1 bis 4 C-Atomen steht, vorzugsweise Methyl oder Ethyl bedeutet, und R gleich oder verschieden ist und verzweigte oder unverzweigte Alkylreste mit 1 bis 22 C-Atome, Cycloalkylreste mit 3 bis 10 C-Atomen, Aryl-, Aralkyl-, Alkylarylreste mit 6 bis 18 C-Atomen bedeutet, wobei die gennanten Reste R auch mit Halogenen wie F oder Cl, mit Ether-, Thioether, Ester-, Amid-, Nitril-, Hydroxyl, Amin-, Carboxyl-, Sulfonsäure-, Carbonsäureanhydrid- und Carbonylgruppen substituiert sein können, wobei im Falle der Polysilane und Oligosiloxane R auch die Bedeutung OR' haben kann, der Carbosilane und Carbosiloxane.

Besonders bevorzugte Siliciumverbindungen sind beispielsweise Tetraethoxysilan, Methyltripropoxysilan, Methyltri(ethoxyethoxy)silan, Vinyltri(methoxyethoxy)silan, (Meth)acryloxypropyltriethoxy- oder -trimethoxysilan, γ-chlorpropyltriethoxysilan, β-Nitrilethyltriethoxysilan, Mercaptopropyltriethoxy- oder -trimethoxysilan, Phenyltriethoxysilan, isoOctyltriethoxysilan, Dipropyldiethoxysilan, Methylphenyldiethoxysilan, Diphenyldimethoxysilan, Methylvinyltri(ethoxyethoxy)silan sowie deren Di- und/oder Trisiloxane. Ferner seien genannt Hexamethyldiethoxytrisiloxan, Octamethylcyclotetrasiloxan, Tetramethyldiethoxydisilan, Trimethyltrimethoxydisilan, Dimethyltetramethoxydisilan, oder deren Kondensationsprodukte sowie Pentamethyldisilan-disiloxan. Die genannten Siliciumverbindungen können allein oder im Gemisch eingesetzt werden.

Die Herstellung der Organosiliciumverbindungen kann nach Verfahren erfolgen wie sie in Noll, Chemie und Technologie der Silicone, 2. Auflage 1968, Weinheim und in Houben-Weyl, Methoden der organischen Chemie, Band E20, S. 1782f., 2219f., Georg Thieme Verlag, Stuttgart, 1987 beschrieben sind.

Die in Wasser dispergierbaren Organosiliciumverbindungen liegen vorzugsweise in einer Menge von 0.5 bis 15 Gew%, bezogen auf den Organopolymeranteil, vor.

Die Siliciumverbindungen werden bevorzugt in Form einer Emulsion der zu versprühenden Organopolymerdispersion zugegeben. Zur Emulgierung verwendet man vorzugsweise die nachstehenden Schutzkolloide, gegebenenfalls in Kombination mit geeigneten Emulgatoren. Als Emulgatoren kommen hierbei sowohl anionische, kationische als auch nichtionische Emulgatoren in Betracht. Bevorzugt sind solche, die nicht im Schutzkolloid löslich sind und deren relative Molekulargewichte im Unterschied zu den Schutzkolloiden unter 2000 liegen. Geeignete Emulgatoren sind dem Fachmann geläufig und finden sich beispielsweise in Houben-Weyl, Methoden der organischen Chemie, Bd. XIV, 1, Makromolekulare Stoffe, Georg Thieme Verlag, Stuttgart, 1961, 192-208. Die Emulgatoren werden in der Regel in Mengen von bis zu 5 Gew%, bezogen auf die Siliciumverbindungen, eingesetzt. Bevorzugt beträgt die Menge < 1 Gew%, bezogen auf die Organopolymeren.

In einer bevorzugten Ausführungsform enthält die Dispersionspulverzusammensetzung 8 bis 50 Gew%, vorzugsweise 10 bis 25 Gew% Schutzkolloid, bezogen auf die Gesamtmenge von wasserunlöslichem Organopolymer und Siliciumverbindung. Geeignete Schutzkolloide sind beispielsweise Polyvinylalkohole und deren Derivate; Polysaccharide in wasserlöslicher Form wie Stärken (Amylose und Amylopectin), Cellulose, Guar, Tragcantinsäure, Dextran, Alginate und deren carboxymethyl-, Methyl-, Hydroxyethyl-, Hydroxypropyl-Derivate; Proteine wie Casein, Sojaprotein, Gelatine; synthetische Polymere wie Poly(meth)acrylsäure, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Weitere, in bevorzugten Ausführungsformen enthaltene Bestandteile der Dispersionspulverzusammensetzung sind Antiblockmittel wie Ca- bzw. Mg-carbonat, Talk, Gips, Kieselsäure, Silicate mit Teilchengrößen vorzugsweise im Bereich von 10 nm bis 10µm.

Die Herstellung der Dispersionspulverzusammensetzung erfolgt mittels Sprühtrocknung. Die Trocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 55°C bis 100°C, bevorzugt 70°C bis 90°C, je nach Anlage, Tg des Harzes und gewünschtem Trocknungsgrad, gewählt.

Bei der Sprühtrocknung kann eine Mischung aus der Polymerdispersion, vorzugsweise mit einem Festgehalt von 20 bis 60 %, und der Emulsion oder gegebenenfalls Dispersion der Siliciumverbindung, vorzugsweise mit einem Festgehalt von 20 bis 50 %, gegebenenfalls nach Zusatz von weiteren Hilfsstoffen, gemeinsam versprüht und getrocknet werden. Es werden dabei Teilchen erhalten, die die wasserunlöslichen Organopolymerteilchen und die Teilchen der Siliciumverbindung in einer Matrix aus wasserlöslichem Schutzkolloid enthalten.

Alternativ zu dieser Verfahrensweise können die wäßrige Organopolymerdispersion und die wäßrige Emulsion oder gegebenenfalls Dispersion der Siliciumverbindung durch getrennte Düsen versprüht werden und im Sprühturm, gegebenenfalls nach Zugabe weiterer Hilfsstoffe, gemeinsam getrocknet werden. Bei dieser Verfahrensweise liegen die Organopolymerteilchen und die Teilchen der Siliciumverbindungen meist als getrennte Teilchen vor.

Die Dispersionspulverzusammensetzung kann in den typischen Anwendungsbereichen eingesetzt werden. Beispielsweise in bauchemischen Produkten in Verbindung mit anorganischen, hydraulisch abbindenden Bindemitteln wie Zementen (Portland-, Aluminat-, Trass-, Hüllen-, Magnesia-, Phosphatzement), Gips, Wasserglas, für die Herstellung von Bauklebern, Putzen, Spachtelmassen, Fußbodenspachtelmassen, Fugenmörtel und Farben. Ferner als Alleinbindemittel für Beschichtungsmittel und Klebemittel oder als Bindemittel für Textilien. Vorzugsweise wird die Dispersionspulverzusammensetzung als hydrophobierendes Bindemittel in Anwendungsgebieten eingesetzt, in denen neben einer guten Haftung auch eine reduzierte Wasseraufnahme und/oder ein wasserabweisender Effekt erwünscht ist.

### Beispiele:

### Herstellung der Dispersionspulver-Zusammensetzungen:

Die Verdüsung wurde in den Beispielen 1 bis 4 sowie im Vergleichsbeispiel in einem Nubilosa-Sprühtrockner vorgenommen:

| | |
|---|---|
| Eintrittstemperatur | 100-130°C |
| Austrittstemperatur | 65-90°C |
| Preßluftdruck vor der Zweistoffdüse | 4 bar |
| Feststoffgehalt der Dispersionen | ca. 33 % |

### Beispiel 1:

Es wurde eine Mischung hergestellt aus einer Vinylacetat-Ethylen-Copolymerdispersion (LL 485 der Wacker-Chemie GmbH, Festgehalt ca. 50 %), einer wäßrigen Emulsion von Isooctyltriethoxysilan (Gehalt ca. 35 %), wobei die Menge des Silans 2.5 Gew%, bezogen auf das Copolymer betrug, und aus 8.5 Gew%, bezogen auf die Copolymer- und Silan-Gesamtmenge, eines Schutzkolloids (Polyvinylalkohol W 25/140 der Wacker-Chemie GmbH). Diese Mischung wurde unter Anwendung obiger Betriebsdaten getrocknet. Das so erhaltene Pulver wurde mit 10 Gew%, bezogen auf das Gesamtgewicht an polymeren Bestandteilen, handelsüblichem Antiblockmittel (Gemisch aus Ca/MgCO₃ und Mg-hydrosilicat) versetzt.

### Beispiel 2:

Es wurde analog Beispiel 1 vorgegangen, mit dem Unterschied, daß die Mischung 4.1 Gew% Isooctyltriethoxysilan enthielt. Das so erhaltene Pulver war sehr gut rieselfähig und redispergierbar.

### Beispiel 3:

Analog Beispiel 1 wurde eine Mischung hergestellt aus einer Styrol-Butylacrylat-Copolymerdispersion (LL 476 der Wacker-Chemie GmbH), einer wäßrigen Emulsion von Isooctyltriethoxysilan, wobei die Menge des Silans 2.1 Gew%, bezogen auf das Copolymer betrug, und aus 8.3 Gew%, bezogen auf die Copolymer- und Silan-Gesamtmenge, eines Schutzkolloids (Polyvinylalkohol W 25/140 der Wacker-Chemie GmbH). Diese Mischung wurde unter Anwendung obiger Betriebsdaten getrocknet. Das so erhaltene Pulver wurde mit 10 Gew%, bezogen auf das Gesamtgewicht an polymeren Bestandteilen, handelsüblichem Antiblockmittel (Gemisch aus Ca/MgCO₃ und Mg-hydrosilicat) versetzt.

### Beispiel 4:

Es wurde analog Beispiel 3 vorgegangen, mit dem Unterschied, daß die Mischung 4.2 Gew% Isooctyltriethoxysilan enthielt. Das so erhaltene Pulver war sehr gut rieselfähig und redispergierbar.

### Vergleichsbeispiel 1:

Es wurde analog Beispiel 1 vorgegangen, mit dem Unterschied, daß der Mischung kein Silan zugesetzt wurde.

### Anwendungstechnische Prüfung:

Die in den Beispielen 1 bis 4 und im Vergleichsbeispiel 1 hergestellten Produkte wurden in folgender Fugenfüller- und Vollwärmeschutzrezeptur eingesetzt:

| Fugenfüller-Rezeptur: | |
|---|---|
| 300.0 | Teile Portlandzement PZ 35 F |
| 40.0 | Teile Aluminat-Zement (HAC-Fondu Lafarge) |
| 649.5 | Teile Quarzsand (0.1-0.4 mm) |
| 0.5 | Teile Culminal C 8556 |
| 10.0 | Teile Dispersionspulver |
| 200 ml | Wasser auf 1000g Trockenmischung |

| Vollwärmeschutz-Rezeptur (Baukleber): | |
|---|---|
| 280.0 | Teile Dykerhoff Weißzement |
| 500.0 | Teile Quarzsand (0.1-0.4 mm) |
| 190.0 | Teile Juraperle MHS |
| 1.5 | Teile Tylose BA 2741 |
| 20.0 | Teile Dispersionspulver |
| 20.0 | Teile Wasser |

### Testung der Fugenfüller-Rezeptur:

Die Biegezugfestigkeit und Druckfestigkeit von mit diesen Rezepturen hergestellten zementären Massen wurden in Anlehnung an DIN 1164 getestet.
Die Wasseraufnahme wurde in Anlehnung an DIN 52617 bestimmt. Die Proben wurden 14 Tage bei Normklima (23°C/50% relative Luftfeuchte) gelagert.
Die Verarbeitbarkeit wurde qualitativ bewertet.
Die Ergebnisse der Testung sind in Tabelle 1 zusammengefaßt.

### Testung der Baukleber-Rezeptur:

Die Haftzugfestigkeit wurde nach 14 Tagen Trockenlagerung mit einer Abzugsgeschwindigkeit von 250 N/s bestimmt.
Für den Wassertropfentest wurden 0.5 ml Wasser mit einer Pipette auf die Oberfläche der auf Styropor aufgebrachten Klebemasse appliziert und die Zeit bis zum Wegschlagen des Tropfens gemessen.

Die Ergebnisse der Testung sind in Tabelle 2 zusammengefaßt.

Die Testergebnisse von Tabelle 1 bzw. Tabelle 2 zeigen, daß die erfindungsgemäßen Dispersionspulver-Zusammensetzungen hydrophobierend wirken, ohne dabei die mechanischen Eigenschaften nachteilig zu verändern. Im Gegensatz zu nachträglich zu Pulvermischungen zugesetzten Hydrophobierungsmitteln wie Stearaten oder Oleaten, wird die Benetzung des Trockenmörtels mit Wasser nicht verzögert, sondern erfolgt sofort.

**Tabelle 1:**

| (Testung der Fugenfüller-Rezeptur) | | | | | |
|---|---|---|---|---|---|
| Beispiel | 1 | 2 | 3 | 4 | Vbsp. 1 |
| Wasseraufnahme (kg/m²xh^{0.5}) | 0.25 | 0.20 | 0.32 | 0.13 | 0.76 |
| Biegezugfestigkeit (N/mm²) | 4.6±0.4 | 4.5±0.2 | 5.7±0.2 | 5.1±0.4 | 4.9±0.3 |
| Druckfestigkeit(N/mm²) | 16.9±0.4 | 16.0±0.3 | 18.0±0.4 | 18.3±0.5 | 17.4±0.5 |
| Verarbeitbarkeit | etwas klebrig | etwas klebrig | sehr gut | sehr gut | etwas klebrig |

**Tabelle 2:**

| (Testung der Kleberrezeptur auf Polystyrol-Platten) | | | | |
|---|---|---|---|---|
| Beispiel | 1 | 2 | 4 | Vbsp. 1 |
| Haftzugfestigkeit (N/mm²) | 0.1 100 % Styroporausriß | 0.11 100 % Styroporausriß | 0.1 100 % Styroporausriß | 0.11 70 % Styroporausriß |
| | | | | |
| Wassertropfentest | 135 min. | 360 min. | 360 min.t | 5 min. |

## Patentansprüche

1. In Wasser redispergierbare Dispersionspulverzusammensetzung auf der Basis von wasserunlöslichen, filmbildenden Organopolymeren, dadurch gekennzeichnet, daß die Pulverzusammensetzung 0.1 bis 30 Gew%, bezogen auf den Organopolymeranteil, einer oder mehrerer, in Wasser dispergierbarer Siliciumverbindungen mit einem Siedepunkt bei Normaldruck von > 160°C aus der Gruppe der Silane wie Tetraorganosilane SiR₄, Kieselsäureester (SiOR')₄, Organoorganoxysilane SiRₙ(OR')₄₋ₙ mit n = 1 bis 3, Polysilane der allgemeinen Formel R₃Si(SiR₂)ₙSiR₃ mit n = 0 bis 8 und Oligosiloxane der allgemeinen Formel R₃SiO(SiR₂O)ₙSiR₃ mit n = 0 bis 4, wobei R' für gleiche oder verschiedene Alkylreste oder Alkoxyalkylreste mit 1 bis 4 C-Atomen steht, vorzugsweise Methyl oder Ethyl bedeutet, und R gleich oder verschieden ist und verzweigte oder unverzweigte Alkylreste mit 1 bis 22 C-Atomen, Cycloalkylreste mit 3 bis 10 C-Atomen, Aryl-, Aralkyl-, Alkylarylreste mit 6 bis 18 C-Atomen bedeutet, wobei die genannten Reste R auch mit Halogenen wie F oder Cl, mit Ether-, Thioether, Ester-, Amid-, Nitril-, Hydroxyl-, Amin-, Carboxyl-, Sulfonsäure-, Carbonsäureanhydrid- und Carbonylgruppen substituiert sein können, wobei im Falle der Polysilane und Oligosiloxane R auch die Bedeutung OR' haben kann, sowie der Carbosilane und Carbosiloxane enthält.

2. Dispersionspulverzusammensetzung nach Anspruch 1, dadurch gekennzeichnet, daß als wasserunlösliche, filmbildende Organopolymere ein oder mehrere Polymere enthalten sind aus der Gruppe Vinylester-Homo- oder -Copolymerisate enthaltend eine oder mehrere Monomereinheiten aus der Gruppe der Vinylester von unverzweigten oder verzweigten Alkylcarbonsäuren mit 1 bis 15 C-Atomen;
(Meth)acrylsäureester-Homo- oder -Copolymerisate enthaltend eine oder mehrere Monomereinheiten aus der Gruppe der Methacrylsäureester und Acrylsäureester von Alkoholen mit 1 bis 10 C-Atomen;
Homo- oder Copolymerisate von Fumar- und/oder Maleinsäuremono- oder -diester von unverzweigten oder verzweigten Alkoholen mit 1 bis 12 C-Atomen;
Homo- oder Copolymerisate von Dienen wie Butadien oder Isopren, sowie von Olefinen wie Ethen oder Propen, wobei die Diene beispielsweise mit Styrol, (Meth)acrylsäureestern oder den Estern der Fumar- oder Maleinsäure copolymerisiert werden können;
Homo- oder Copolymerisate von Vinylaromaten wie Styrol, Methylstyrol, Vinyltoluol; Homo- oder Copolymerisate von Vinylhalogenverbindungen wie Vinylchlorid.

3. Dispersionspulverzusammensetzung nach Anspruch 1 oder 2, dadurch gekennzeichnet, daß als Siliciumverbindungen eine oder mehrere enthalten sind aus der Gruppe Tetraethoxysilan, Methyltripropoxysilan, Methyltri(ethoxyethoxy)silan, Vinyltri(methoxyethoxy)silan, (Meth)acryloxypropyltriethoxy- oder -trimethoxysilan, γ-Chlorpropyltriethoxysilan, β-Nitrilethyltriethoxysilan, Mercaptopropyltriethoxy- oder -trimethoxysilan, Phenyltriethoxysilan, iso-Octyltriethoxysilan, Dipropyldiethoxysilan, Methylphenyldiethoxysilan, Diphenyldimethoxysilan, Methylvinyltri(ethoxyethoxy)silan sowie deren Diund/oder Trisiloxane sowie Hexamethyldiethoxytrisiloxan, Octamethylcyclotetrasiloxan, Tetramethyldiethoxydisilan, Trimethyltrimethoxydisilan, Dimethyltetramethoxydisilan, oder deren Kondensationsprodukte sowie Pentamethyldisilan-disiloxan.

4. Verfahren zur Herstellung einer Dispersionspulverzusammensetzung nach Anspruch 1 bis 3, mittels Sprühtrocknung, wobei bei der Sprühtrocknung eine Mischung aus der Organopolymerdispersion und der Emulsion oder Dispersion der Siliciumverbindung, gegebenenfalls nach Zusatz von weiteren Hilfsstoffen, gemeinsam versprüht und getrocknet wird.

5. Verfahren zur Herstellung einer Dispersionspulverzusammensetzung nach Anspruch 1 bis 3, mittels Sprühtrocknung, wobei bei der Sprühtrocknung die Organopolymerdispersion und die Emulsion oder Dispersion der Siliciumverbindung durch getrennte Düsen versprüht werden und im Sprühturm, gegebenenfalls nach Zugabe weiterer Hilfsstoffe, gemeinsam getrocknet werden.

6. Verwendung von Dispersionspulverzusammensetzungen nach Anspruch 1 bis 3 als Bindemittel in bauchemischen Produkten in Verbindung mit anorganischen, hydraulisch abbindenden Bindemitteln wie Zement, Gips, Wasserglas, für die Herstellung von Bauklebern, Putzen, Spachtelmassen, Fußbodenspachtelmassen, Fugenmörtel und Farben.

7. Verwendung von Dispersionspulverzusammensetzungen nach Anspruch 1 bis 3 als Alleinbindemittel für Beschichtungsmittel und Klebemittel oder als Bindemittel für Textilien.

## Claims

1. Dispersion powder composition which is redispersible in water and is based on water-insoluble film-forming organopolymers, characterized in that the powder composition comprises 0.1 to 30% by weight, based on the organopolymer content, of one or more water-dispersible silicon compounds having a boiling point under normal pressure of > 160°C, from the group consisting of silanes, such as tetraorganosilanes SIR₄, silicic acid esters (Si OR')₄, organoorganoxysilanes SiRₙ (OR') ₄₋ₙ, where n = 1 to 3, polysilanes of the general formula R₃Si (SiR₂)ₙSiR₃ where n - 0 to 8 and oligosiloxanes of the general formula R₃SiO(SiR₂O)ₙSiR₃ where n = 0 to 4, in which R' represents identical or different alkyl radicals or alkoxyalkyl radicals having 1 to 4 C atoms, and preferably denotes methyl or ethyl, and R is identical or different and denotes branched or unbranched alkyl radicals having 1 to 22 C atoms, cycloalkyl radicals having 3 to 10 C atoms, or aryl, aralkyl or alkylaryl radicals having 6 to 18 C atoms, it also being possible for the radicals R mentioned to be substituted by halogens, such as F or Cl, or by ether, thioether, ester, amide, nitrile, hydroxyl, amine, carboxyl, sulphonic acid, carboxylic acid anhydride and carbonyl groups, and in which, the case of the polysilanes and oligosiloxanes, R can also have the meaning OR', and also the carbosilanes and carbosiloxanes.

2. Dispersion powder composition as claimed in Claim 1, characterized in that it comprises, as the water-insoluble film-forming organopolymers, one or more polymers from the group consisting of vinyl ester homo- or copolymers containing one or more monomer units from the group consisting of vinyl esters of unbranched or branched alkylcarboxylic acids having 1 to 15 C atoms; (meth)acrylic acid ester homo- or copolymers containing one or more monomer units from the group consisting of methacrylic acid esters and acrylic acid esters of alcohols having 1 to 10 C atoms;
homo- or copolymers of fumaric and/or maleic acid mono- or diesters of unbranched or branched alcohols having 1 to 12 C atoms;
homo- or copolymers of dienes, such as butadiene or isoprene, and of olefins, such as ethene or propene, it being possible for the dienes to be copolymerized, for example, with styrene, (meth)acrylic acid esters or the esters of fumaric or maleic acid;
homo- or copolymers of vinyl aromatics, such as styrene, methylstyrene or vinyltoluene;
homo- or copolymers of vinyl-halogen compounds, such as vinyl chloride.

3. Dispersion powder composition according to Claim 1 or 2, characterized in that it comprises, as the silicon compounds, one or more from the group consisting of tetraethoxysilane, methyltripropoxysilane, methyltri(ethoxyethoxy)silane, vinyltri(methoxyethoxy)silane, (methlacryloxypropyltriethoxy- or -trimethoxysilane, γ-chloropropyltriethoxysilane, β-nitriloethyltriethoxysilane, mercaptopropyltriethoxy- or -trimethoxysilane, phenyltriethoxysilane, iso-octyltriethoxysilane, dipropyldiethoxysilane, methylphenyldiethnxyailane; diphenyldimethoxysilane, methylvinyltri(ethoxyethoxy)silane and di- and/or trisiloxanes thereof, and hexamethyldiethoxytrisiloxane, octamethylcyclotetrasiloxane, tetramethyldiethoxydisilane, trimethyltrimethoxydisilane, dimethyltetramethoxydisilane, or condensation products thereof, and pentamethyldisilane-disiloxane.

4. Process for the preparation of a dispersion powder composition according to Claim 1 to 3 by means of spray drying, wherein a mixture of the organopolymer dispersion and the emulsion or dispersion of the silicon compound is sprayed and dried together, if appropriate after addition of further auxiliaries, in the spray drying.

5. Process for the preparation of a dispersion powder composition according to Claim 1 to 3 by means of spray drying, wherein, in the spray drying, the organopolymer dispersion and the emulsion or dispersion of the silicon compound are sprayed through separate nozzles and dried together in the spray tower, if appropriate after addition of further auxiliaries.

6. Use of a dispersion powder composition according to Claim 1 to 3 as a binder in chemical building products in combination with inorganic, hydraulically setting binders, such as cement, gypsum or water-glass, for the preparation of building adhesives, plasters, stopper compositions, flooring stopper compositions, joint mortars and paints.

7. Use of a dispersion powder composition according to Claim 1 to 3 as a sole binder for coating compositions and adhesives or as a binder for textiles.

## Revendications

1. Composition pulvérulente en dispersion, pouvant être redispersée dans l'eau, à base d'organopolymères filmogènes, insolubles dans l'eau, caractérisée en ce que la composition pulvérulente contient 0,1 à 30% en poids, sur base de la quantité d'organopolymère, d'un ou plusieurs composés du silicium, pouvant être redispersés dans l'eau, avec un point d'ébullition à pression normale de >160°C, du groupe des silanes comme les tétraorganosilanes SiR₄, esters de l'acide silicique Si(OR')₄, organoorganoxysilanes SiRₙ(OR')₄₋ₙ avec n = 1 à 3, polysilanes de formule générale R₃Si(SiR₂)ₙSiR₃ avec n = 0 à 8 et oligosiloxanes de formule générale R₃SiO(SiR₂O)ₙSiR₃ avec n = 0 à 4, où R' représente des radicaux alcoyle ou des radicaux alcoxyalcoyle identiques ou différents, avec 1 à 4 atomes C, de préférence méthyle ou éthyle, et R est identique ou différent et représente des radicaux alcoyle linéaires ou ramifiés avec 1 à 22 atomes C, des radicaux cycloalcoyle avec 3 à 10 atomes C, des radicaux aryle, aralcoyle ou alcoylaryle avec 6 à 18 atomes C, où les radicaux R cités peuvent être substitués par un halogène comme F ou Cl, par des groupes éther, thioéther, ester, amide, nitrile, hydroxyle, amine, carboxyle, acide sulfonique, anhydride carboxylique et carbonyle, où dans le cas des polysilanes et oligosiloxanes, R peut également avoir la signification OR', ainsi que les carbosilanes et carbosiloxanes.

2. Composition pulvérulente en dispersion suivant la revendication 1, caractérisée en ce qu'elle contient comme organopolymère filmogène, insoluble dans l'eau, un ou plusieurs polymères du groupe des homo- ou copolymères d'ester vinylique contenant une ou plusieurs unités monomériques du groupe des esters vinyliques d'acides alcoylcarboxyliques linéaires ou ramifiés avec 1 à 15 atomes C;
des homo- ou copolymères d'ester d'acide (méth)acrylique contenant une ou plusieurs unités monomériques du groupe des esters de l'acide méthacrylique et des esters de l'acide acrylique d'alcools avec 1 à 10 atomes C;
des homo- ou copolymères de mono- ou diester d'acide fumarique et/ou maléique d'alcools linéaires ou ramifiés avec 1 à 12 atomes C;
des homo- ou copolymères de diènes comme le butadiène ou l'isoprène, ainsi que d'oléfines comme l'éthène ou le propène, où les diènes peuvent être copolymérisés, par exemple, avec le styrène, des esters de l'acide (méth)acrylique ou des esters de l'acide fumarique ou maléique;
des homo- ou copolymères de vinylaromatiques comme le styrène, le méthylstyrène ou le vinyltoluène; d'homo- ou de copolymères de composés vinylhalogénés comme le chlorure de vinyle.

3. Composition pulvérulente en dispersion suivant les revendications 1 ou 2, caractérisée en ce qu'elle contient comme composés du silicium, un ou plusieurs du groupe du tétraéthoxysilane, méthyltripropoxysilane, méthyltri(éthoxyéthoxy)silane, vinyltri(méthoxyéthoxy)silane, (méth)acryloxypropyltriéthoxy- ou -triméthoxysilane, γ-chloropropyltriéthoxysilane, β-nitriléthyltriéthoxysilane, mercaptopropyltriéthoxy- ou -triméthoxysilane, phényltriéthoxysilane, iso-octyltriéthoxysilane, dipropyldiéthoxysilane, méthylphényldiéthoxysilane, diphényldiméthoxysilane, méthylvinyltri(éthoxyéthoxy)silane ainsi que leurs di- et/ou trisiloxanes, ainsi que hexaméthyldiéthoxytrisiloxane, octaméthylcyclotétrasiloxane, tétraméthyldiéthoxydisilane, triméthyltriméthoxydisilane, diméthyltétraméthoxydisilane ou leurs produits de condensation ainsi que pentaméthyldisilane, -disiloxane.

4. Procédé de préparation d'une composition pulvérulente en dispersion suivant les revendications 1 à 3, par séchage par pulvérisation, où lors du séchage par pulvérisation, un mélange de la dispersion d'organopolymère et de l'émulsion ou dispersion du composé du silicium, facultativement après addition d'autres adjuvants, est pulvérisé et séché.

5. Procédé de préparation d'une composition pulvérulente en dispersion suivant les revendications 1 à 3, par séchage par pulvérisation, où lors du séchage par pulvérisation, la dispersion d'organopolymère et l'émulsion ou dispersion du composé du silicium sont pulvérisées par des buses séparées et sont simultanément séchées dans la tour de pulvérisation, facultativement après addition d'autres adjuvants.

6. Utilisation de compositions pulvérulentes en dispersion suivant les revendications 1 à 3, comme liant dans des produits chimiques de construction, en association avec des liants inorganiques, hydrauliques de prise comme le ciment, le plâtre, le silicate de potasse, pour la préparation de colles de construction, enduits, enduits de surface, enduits de sol, mortiers de joint et peintures.

7. Utilisation de compositions pulvérulentes en dispersion suivant les revendications 1 à 3, comme liant unique des agents de revêtement et colles ou comme liant pour textiles.
